# EUROPEAN PATENT APPLICATION

(11) **EP 0 911 739 A2**
(43) Date of publication of application: **28.04.1999**
(21) Application number: 98308211.6
(22) Date of filing: 08.10.1998
(51) Int. Cl.: G06F 13/38, H04B 5/00

(54) **Data-transfer method and device**

(30) Priority: 17.10.1997 GB 9721911
(71) Applicant: Topsoft Limited, Worcester WR1 2PL (GB)
(72) Inventor: Topping, John William, Worcester WR2 6DS (GB)
(74) Representative: Kinton, Colin David

(57) **Abstract**

A method is provided for transferring data, in either direction, between a first and a second data-store, by means of radiant energy such as infra-red waves or radio-waves. The method is carried out by means of a device comprising a data-store (12), a transmitter/receiver (13), a power-source (15) and a control-means (16), all of which are operably connectable, together with a container (11) adapted to enclose the components (11), (12), (13) and (15) and to support the control-means (16). Such a device may be made so as to be hand-held by a user and readily transportable on the person of the user.

## Description

This invention relates to a method for the transfer of data, in particular to a method for transferring data between two or more data-stores without the need for a physical connection between any of the data stores, as well as to a device for carrying out the method aforesaid.

Many types of data-store are known and may be described as either "fixed" or "portable".

A "fixed" data-store may consist essentially of a computer or a computer-driven machine.

A particular example of a "portable" data-store is that class of devices known as "touch-tokens". Touch-tokens can be used, for instance, to store identity data (such as may be required for access to records held on a computer) or to store data which serves as a key (such as may be required to gain physical access to a secured site).

All such data-stores are provided with some form of transmitting/receiving entity to enable the transfer of data between stores.

Hitherto, transfer of data between stores has necessitated some physical contact between the stores. For example, physical contact by means of temporary connection (as when a "touch-token" is held against a "reader" to transfer information), by means of third party transfer (as when data is transferred from one store to a disk, the disk then being taken to the second store) or by means of permanent connection (as when two or more data-stores are connected by wires or cables).

The applicants have now found that the need for physical contact between data-stores can be avoided, in accordance with the present invention, by using a form of radiant energy to transmit and receive the data between data stores.

The applicants have discovered that transmission and reception of data by means of a device according to the present invention is especially useful where at least one of the data-stores is portable relative to the other.

Accordingly, the present invention provides, in a first aspect, a method for transferring data, in either direction, between a first data-store and a second data-store, by way of a transmitter/receiver operably associated with the first data-store to a complementary receiver/transmitter operably associated with the second data-store, in which the data is transferred by means of radiant energy.

In a second aspect, the present invention provides a device for carrying out the method described in the immediately-preceding paragraph, in which the device comprises:-
(i) a data-store;
(ii) a transmitter/receiver operably connected with the data-store (i);
(iii) a power-source operably connected with the data-store (i) and the transmitter/receiver (ii);
and (iv) a control means operably connected with any one or more of (i), (ii) and (iii);
together with a container adapted to enclose (i), (ii) and (iii) and to support (iv).

Preferably, the data-store (i) is a read/write data storage device, for example a touch memory token or a micro-chip.

Where the data-store (i) constitutes the "first data-store" in accordance with the first aspect of the present invention, the "second data-store" may be, for example, a computer or computer-driven machine.

In a particularly preferred embodiment, the device according to the second aspect of the present invention is portable, relative to the "second data-store". More preferably, the components (i), (ii), (iii) and (iv) can be obtained in miniaturised form, whereby the device is capable of being hand-held by the user and readily transportable on the person of the user.

In an especially preferred embodiment, the device is adapted for use in connection with a portable computer.

The radiant energy acting to transfer data between the two data-sources may, for example, comprise electro-magnetic radiation, such as infra-red or radio waves.

The data-store (i), transmitter/receiver (ii), power-source (iii) and control means (iv) may be operably connected by way of electronic circuitry, adapted to control data flow and known per se.

The power-source (iii) may suitably comprise a battery, for example a lithium battery.

The control means (iv) preferably comprises an on/off switch such as a push-button switch. Many such switches are readily available, as is well known to those skilled in the art to which the present invention relates.

Thus, in a preferred embodiment, a device according to the present invention will allow the transfer of a data to or from a read/write data storage device to a computer, or computer-driven machine, via a transmitter/receiver, without the need to have a physical connection between the data storage device and the computer.

The device may comprise a hand-held case enclosing the data storage device, a battery and a miniaturised transmitter/receiver. The user activates the device by pressing a button on the case to connect the data storage device and the transmitter/receiver, thus controlling the transmission and receipt of data between the data storage device and the computer.

Devices according to the present invention may optionally further include a personal identification unit operably associated with the data-store (i). The personal identification unit has identification data relating to one or more specified users stored therein. The user must first provide matching identification data to the identification unit, before the unit can operate to allow the user access to the data-store (i).

For example, the identification unit can be a biometric fingerprint chip associated with a receptor pad. The user must press the receptor pad with a specified digit (e.g. the right thumb) and the resulting thumb-print is compared with the print stored in the biometric fingerprint chip. Only when correct matching occurs will the chip allow the user access to the data-store (i). In the absence of correct matching, the user will be unable to operate the device or to gain access to the data which it contains.

The present invention will be illustrated, merely by way of example, in the following description and with reference to the accompanying drawings.

In the drawings:
**Figure 1** is a schematic block-diagram of a device according to the present invention;
**Figure 2** is a schematic block-diagram of a first type of circuit suitable for use in the device shown in Figure 1;
**Figure 3** is a schematic block-diagram of a second type of circuit suitable for use in the device shown in Figure 1.

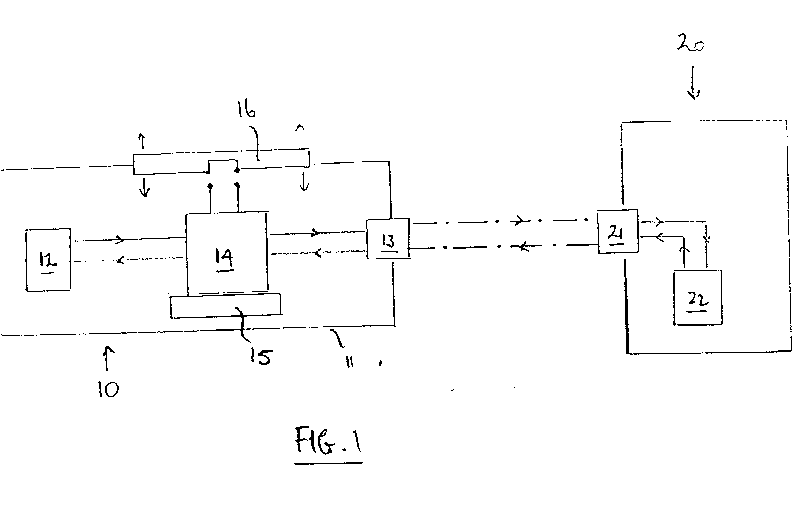

Referring now to Figure 1, the device 10 comprises a hand-held case 11 which encloses a touch memory token 12 (DS 1991, available from Dallas Semiconductors) and a transmitter/receiver 13 (IRDA, available from Hewlett Packard).

The touch memory token 12 and transmitter/receiver 13 are operably linked by means of circuitry 14, which controls the flow of data between the touch memory token and the transmitter/receiver.

The device is powered by means of a battery 15 (also enclosed within the case 11), operably connected with the touch memory token 12 and the transmitter/receiver 13 and operated by means of a push-button switch 16.

In use, data is transmitted by means of infra-red radiation (shown in the drawing by chain-dotted lines) to a computer 20 and is received at receiver/transmitter 21 and transferred to the memory and/or data-store 22 of the computer.

The receiver/transmitter 21 will need to act in a complementary manner to, and to be compatible with, the transmitter/receiver 13.

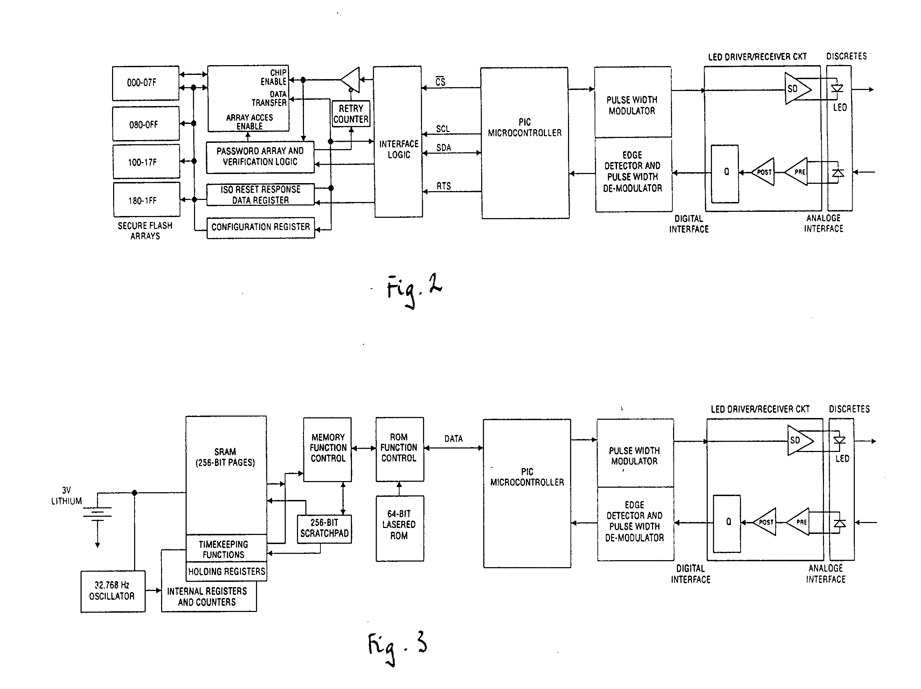

Figures 2 and 3 show two types of circuit layout adapted to perform the functions of the data-store and the transmitter/receiver of the device of Figure 1.

In the circuit shown in Figure 2, the data-store comprises a micro-chip (such as that available as ZICOR* X76F041).
* Registered Trade Mark.

In the circuit shown in Figure 3, the data-store comprises a touch memory token (such as that available as DALLAS* DS 1991).

## Claims

1. A method for transferring data, in either direction, between a first data-store and a second data-store, by way of a transmitter/receiver operatively associated with the first data-store, to a complementary receiver/transmitter operatively associated with the second data-store, **characterised in that** the data is transferred by means of radiant energy.

2. A method according to Claim 1, **characterised in that** the radiant energy comprises electro-magnetic radiation (for example infra-red waves or radio-waves).

3. A device for carrying out the method of Claim 1 or 2, the device being **characterised by**:
(i) a data-store (12);
(ii) a transmitter/receiver (13) operably connected with the data-store (12);
(iii) a power-source (15) operably connected with the data-store (12) and the transmitter/receiver (13);
(iv) a control means (16) operably connected with any one or more of the data-store (12), the transmitter/receiver (13) and the power-source (15), together with a container (11) adapted to enclose the ata-store (12), the transmitter/receiver (13) and the power-source (15) and to support the control means (16).

4. A device according to Claim 3, **characterised in that** the data-store (12) is a read/write data storage device (for example a touch memory token or a micro-chip).

5. A device according to Claim 3 or 4, **characterised in that** the device is capable of being hand-held by a user and readily transportable on the person of the user.

6. A device according to Claim 5, **characterised in that** the device is capable of being used in connection with a portable computer.

7. A device according to any one of Claims 3 to 6, **characterised in that** the power source (15) comprises a battery (for example a lithium battery).

8. A device according to any one of Claims 3 to 7, **characterised in that** the control means (16) comprises an on/off switch (for example a push-button switch).

9. A device according to any one of Claims 3 to 8, **characterised in that** the container (11) comprises a hand-held case enclosing the data-store (12), a miniaturised transmitter/receiver (13) and a battery (15) **and in that** the device is activated by means of a push-button switch (16) on the case.

10. A device according to any one of Claims 3 to 9, **characterised in that** the device further includes a personal identification unit (for example a biometric fingerprint chip) in which is stored identification data which must be matched by the user before the unit can operate to allow the user access to the data-store (12).
